# EUROPEAN PATENT APPLICATION

(11) **EP 2 409 632 A1**
(43) Date of publication of application: **25.01.2012**
(21) Application number: 11170085.2
(22) Date of filing: 16.06.2011
(51) Int. Cl.: A47L 15/50, F16J 15/32

(54) **Mounting Kit**

(30) Priority: 07.07.2010 TR 201005536
(71) Applicant: Vestel Beyaz Esya Sanayi Ve Ticaret A.S., 45030 Manisa (TR)
(72) Inventor: Hulagu, Orhan, 45030 Manisa (TR); Oztop, Ozgur, 45030 Manisa (TR)
(74) Representative: Cayli, Hülya

(57) **Abstract**

The mounting kit (6) according to the present invention developed for washing and/or drying machines comprises at least one mounting part (7) provided with at least one hub (10); at least one sealing element (8) attached to the hub (10); and at least one flexible element (11), tightly fitted to the hub (10) and holding the sealing element (8) here in place. The role of the flexible element (11) is to prevent any detachment of the sealing element (8) from the direction in which it is attached. The sealing element (8) and the flexible element (11) are preferably embodied in closed forms such as a ring, circle, etc.

## Description

The present invention relates to mounting parts and kits by which sealing elements are fixed in washing and/or drying machines.

### Prior Art

As known, washers and dishwashers are produced as a result of assembling together many components, including those provided also with various sealing elements. Since such machines do serve their function by making use of water, said sealing elements become essential and are substantially benefited from. Depending on the place of use in a machine, sealing elements are fastened to some mounting parts beforehand, such that the mounting parts are mounted, along with the sealing elements provided thereon, during a general assembly of machines. There are case, however, in which sealing elements do not remain safely on the mounting part, and further in which the sealing elements become detached therefrom inadvertently (e.g. dropping down, ejecting off, etc.). This case leads to interruptions in production and to elevation in costs. Various works have been done in the prior art to have sealing elements stay stable on mounting parts, where in many of these works, special groove designs (accommodating the sealing element), or additional fastening components are used to solve this problem. The published patent application DE4141894 may be referred to as a relevant example. In this application is disclosed a gasket groove, or seal groove, in which side ribs are formed to held a seal in place. Whilst this disclosure presents a structure to hold the sealing element, the seal, in place, the high production cost associated therewith is deemed to be a drawback.

### Brief Description of Invention

As for the mounting kit according to the present invention developed for dishwashers and/or washers and/or driers, it comprises at least one mounting part provided with at least one hub; at least one sealing element attached to the hub and at least one flexible element, tightly fitted to the hub and holding the sealing element here in place. The role of the flexible element is to prevent any detachment of the sealing element from the direction in which it is attached. The sealing element and the flexible element are preferably embodied in closed forms such as a ring, circle, etc.

### Object of Invention

The object of this invention is to provide a part by which sealing elements can be fixed in place in washing machines and a mounting kit composed thereof.

Another object of this invention is to avoid any unintentional detachment of sealing elements from the mounting parts on which they are provided.

A further object of this invention is to provide an easily-producible and inexpensive, reliable mounting kit.

### Description of Figures

An illustrative embodiment of the subject mounting kit is illustrated in annexed figures briefly described hereunder.
Figure 1 is a front view of the interior of a dishwasher.
Figure 2 is a general perspective view of parts fastened by means of the mounting kit in a dishwasher.
Figure 3 is a perspective view of the mounting kit.
Figure 4 is a general perspective view of a cross-section of the mounting kit.
Figure 5 is a general perspective view of a cross-section of the mounting kit in mounted form.

All the parts illustrated in figures are individually assigned a reference numeral and the corresponding terms of these numbers are listed below.
Dishwasher (1)
Basket (2)
Rail (3)
Wheel (4)
Wall (5)
Mounting kit (6)
Mounting part (7)
Sealing element (8)
Groove (9)
Hub (10)
Flexible element (11)
Mounting part (12)

### Description of Invention

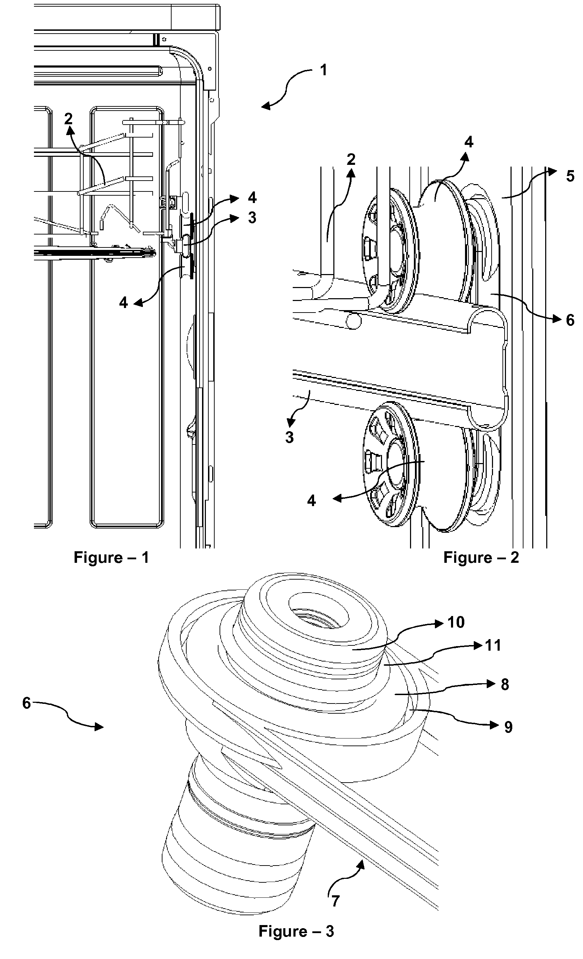

Figures 1 and 2 illustrate different views of the interior of a dishwasher (1), for an exemplary embodiment of the present invention. As known, at least one basket (2) into which dishes to be washed are placed, and other elements enabling to move the basket (2) forth and back are provided in dishwashers (1). The elements allowing to move the basket may be in the form of freely-turning wheels (4), fixed to an inner wall (5) of the dishwasher (1), as well as rails (3), resting on these wheels (4), thereby moving together with the basket (2). In order to fix the wheels (4) to the inner wall (5), in turn, the mounting kit (6) according to the present invention may be used. According to this exemplar embodiment, the mounting kit (6) is attached to the inner wall (5) of the dishwasher (1), and serves both to bear the wheels (4), and to hinder any infiltration of washing water into the wall (5). (The present invention can likewise be employed in other washing and/or drying machines, except dishwashers.)

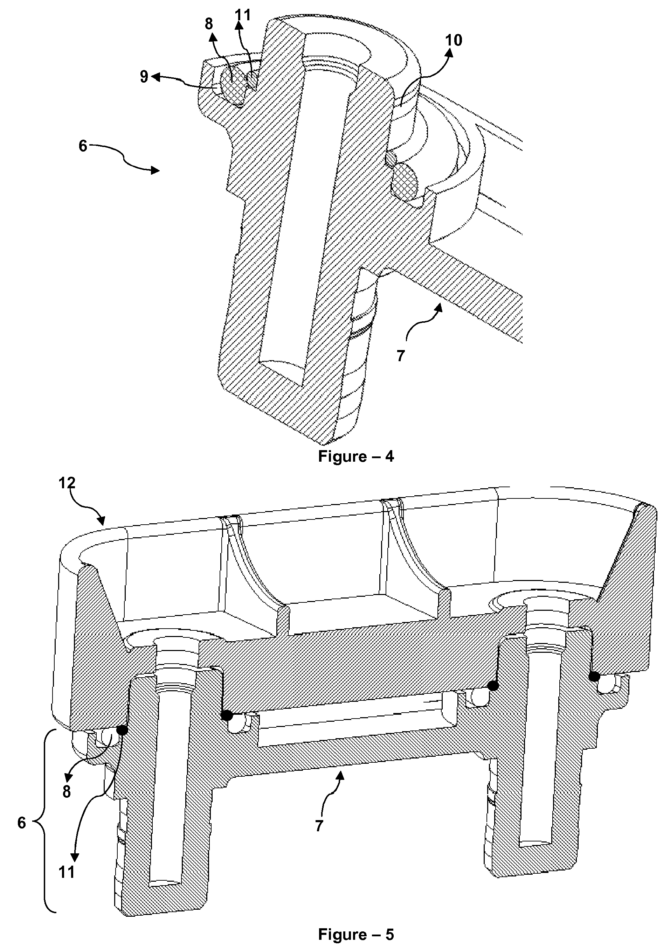

Figures 3 to 5 provide various views of the mounting kit (6) according to the present invention. Accordingly, the mounting kit (6) comprises at least one mounting part (7); at least one sealing element (8) attached onto the mounting part (7), and at least one flexible element (11) fixing the sealing element (8) in place (to avoid any unintentional detachment of the sealing element from the mounting part (7)). As illustrated in Figure 5, another mounting part (12) is attached onto the mounting kit (6). There, the presence of said sealing element (8) between the mounting kit (6) and the other mounting part (12) ensures sealing between these two mounting parts (7, 12).

It is important that the mounting kit (6) is formed as illustrated in figures 3-4, before the mounting parts (7, 12) are brought to an assembled form as illustrated in Figure 5. The exemplary mounting kit (8) illustrated in an assembled form in figures 3 and 4 can be used in this form as a semi-finished part during an assembly of machines. Put in other words, the mounting kit (6) obtained by bringing together the mounting part (7), sealing element (8), and the flexible element (11) is used in this form during machine assembly.

As set forth above, the mounting kit (6) according to the present invention comprises at least one mounting part (7); at least one sealing element (8), which can be attached to the mounting part (7); and at least one flexible element (11), which can be attached to the mounting part (7) and can fix the sealing element (8) there in place (to avoid any unintentional detachment of the sealing element (8) from the mounting part (7)).

After the sealing element (8) is attached to the mounting part (7), the flexible element (11) is attached to the same part (7). The role of the flexible element (11) is to prevent any detachment of the sealing element (8) from the direction in which it is attached. The sealing element (8) and the flexible element (11) are preferably embodied in a closed form (having no protruding parts, i.e. devoid of ending parts) such as a ring, circle, etc., and are attached to at least one hub (10) provided on the mounting part (7), as illustrated in figures 3 to 5.

Whilst the sealing element (8) can be attached to the hub (10) in any desired fashion such as loose attachment or tight attachment, it is essential to attach the flexible element (11) to the hub (10) definitely in a tight-fit manner (in order to avoid any inadvertent displacement or dislocation of both itself and of the sealing element (8)). As for the case when the mounting part (7) is provided with at least one groove (9) to which at least one side of the sealing element (8) rests, it becomes adequate to tightly fit at least one flexible element (11) to the hub (10) from one side, so as to stay on the sealing element (8). In this manner, a reliable mounting kit is formed, which is both inexpensive, and prevents any dislocation of the sealing element (8).

## Claims

1. A mounting kit (6) for washing and/or drying machines, **characterized by** comprising
at least one mounting part (7) provided with at least one hub (10);
at least one sealing element (8) attached to the hub (10); and
at least one flexible element (11), tightly fitted to the hub (10), and holding the sealing element (8) in its place.

2. The mounting kit (6) according to Claim 1, **characterized in that** said sealing element (8) is in the form of a ring.

3. The mounting kit (6) according to Claim 1, **characterized in that** said flexible element (11) is in the form of a ring.

4. The mounting kit (6) according to Claim 1, **characterized in that** said mounting part (7) is provided with at least one groove (9) to which at least one side of the sealing element (8) rests.
